# FASCICULE DE BREVET EUROPEEN

(11) **EP 4 148 470 B1**
(45) Date de publication et mention de la délivrance du brevet: **25.11.2026**
(21) Numéro de dépôt: 22195220.3
(22) Date de dépôt: 12.09.2022
(51) Int. Cl.: G02B 6/13, G02B 6/136, G02B 6/12

(54) **PROCEDE DE FABRICATION D'UN SYSTEME OPTOELECTRONIQUE EN PHOTONIQUE SUR SILICIUM COMPORTANT UN DISPOSITIF OPTIQUE COUPLE A UN CIRCUIT PHOTONIQUE INTEGRE**
VERFAHREN ZUR HERSTELLUNG EINES OPTOELEKTRONISCHEN SYSTEMS MIT SILIZIUM-PHOTONIK, DAS EINE OPTISCHE VORRICHTUNG UMFASST, DIE MIT EINER INTEGRIERTEN PHOTONISCHEN SCHALTUNG GEKOPPELT IST
METHOD FOR MANUFACTURING A SILICON-BASED PHOTONIC OPTOELECTRONIC SYSTEM COMPRISING AN OPTICAL DEVICE COUPLED WITH AN INTEGRATED PHOTONIC CIRCUIT

(30) Priorité: 14.09.2021 FR 2109593
(43) Date de publication de la demande: 15.03.2023
(73) Titulaire: Commissariat à l'Energie Atomique et aux Energies Alternatives, 75015 Paris (FR)
(72) Inventeur: SZELAG, Bertrand, 38054 GRENOBLE Cedex 9 (FR); HASSAN, Karim, 38054 GRENOBLE Cedex 9 (FR); WILMART, Quentin, 38054 GRENOBLE Cedex 9 (FR)
(74) Mandataire: Santarelli

(56) Documents cités:
- US-A1- 2015 140 720
- US-A1- 2016 377 806
- US-A1- 2021 239 903

## Description

### DOMAINE TECHNIQUE

Le domaine de l'invention est celui des systèmes optoélectroniques en photonique sur silicium comportant un dispositif optique, tel qu'une source laser hybride à semiconducteur, couplé optiquement à un circuit photonique intégré.

### ÉTAT DE LA TECHNIQUE ANTÉRIEURE

D'une manière générale, un système optoélectronique en photonique sur silicium peut comporter un dispositif optique, tel qu'une source laser, couplé optiquement à un circuit photonique intégré. La source laser est réalisée à base d'un composé semiconducteur, par exemple un composé III-V tel que de l'InP, et le circuit photonique intégré est réalisé à partir d'un substrat de type silicium sur isolant (SOI pour *Silicon On Insulator,* en anglais). Le circuit photonique intégré comporte des composants optiques passifs (guides d'onde, multiplexeurs, coupleurs...) et/ou actifs (modulateurs, photodétecteurs...), dont un guide d'onde couplé optiquement à la source laser.

La source laser est dite hybride dans la mesure où la cavité optique est définie par des réflecteurs situés dans le circuit photonique intégré. Plus précisément, la source laser est formée d'un guide d'onde actif réalisé à base du composé semiconducteur qui forme le milieu à gain. Dans le cas d'un laser de type à réflecteur de Bragg distribué (DBR pour *Distributed Bragg Reflector,* en anglais), la cavité optique est délimitée par deux réseaux de Bragg situés dans le guide d'onde intégré, qui forment des miroirs sélectifs en longueur d'onde. Dans le cas d'un laser de type à rétroaction distribuée (DFB pour *Distributed FeedBack,* en anglais), un même réseau de Bragg s'étend dans le guide d'onde intégré sur toute la longueur de la cavité optique.

Cependant, il peut être avantageux de réaliser un élément additionnel couplé d'une part au guide d'onde actif et d'autre part au guide d'onde dit inférieur du circuit photonique intégré. A ce titre, le document US10488587B2 décrit un exemple d'un tel système optoélectronique comportant une source laser hybride III-V/Si couplé au circuit photonique intégré par le biais d'un élément additionnel séparé du guide d'onde inférieur par une couche mince d'oxyde. Le guide d'onde inférieur et les composants optiques passifs et actifs sont réalisés à partir de la couche mince de silicium monocristallin d'un substrat SOI. Le guide d'onde inférieur présente ainsi une épaisseur peu importante, typiquement inférieure ou égale à 300nm environ, propice au bon fonctionnement des différents composants optiques du circuit photonique intégré. Il peut alors être préférable, comme le décrit ce document, de prévoir un élément additionnel en silicium, d'une épaisseur différente de celle du guide d'onde inférieur. Aussi, alors que l'épaisseur du guide d'onde inférieur dépend des contraintes de fonctionnement des composants optiques du circuit photonique intégré, l'épaisseur de cet élément additionnel est choisie pour optimiser le couplage optique avec le guide d'onde actif.

Le procédé de fabrication d'un tel système optoélectronique comporte alors une étape de réalisation du circuit photonique intégré à partir de la couche mince de silicium monocristallin d'un substrat SOI ; une étape de réalisation du guide d'onde intermédiaire par dépôt pleine plaque de silicium amorphe puis gravure localisée ; et une étape de réalisation du guide d'onde actif de la source laser hybride par collage moléculaire d'un empilement formant une hétérostructure semiconductrice.

Cependant, la réalisation de cet élément additionnel comporte donc des opérations de dépôt de silicium et de planarisation par polissage mécano-chimique (CMP), ce qui peut rendre complexe l'obtention d'un élément additionnel ayant les dimensions voulues et en particulier une épaisseur homogène. En effet, l'opération de polissage mécano-chimique peut conduire à la formation d'une dépression dans l'élément additionnel en silicium amorphe : une concavité peut se former dans le silicium amorphe à partir de sa face supérieure, se traduisant par une inhomogénéité de l'épaisseur de l'élément additionnel. Ainsi, il existe un besoin de disposer d'un procédé de fabrication d'un tel système optoélectronique qui permette d'obtenir un élément additionnel ayant les dimensions voulues, en particulier une épaisseur homogène.

On connaît également le document US 2016/377806 A1, qui décrit la réalisation de guides d'onde supérieur et inférieur couplés l'un à l'autre par un guide d'onde intermédiaire qui s'étend verticalement. Le guide d'onde inférieur est réalisé à partir d'un premier substrat SOI et le guide d'onde supérieur est réalisé à partir d'un deuxième substrat SOI. Le guide d'onde intermédiaire est réalisé après l'assemblage des deux substrats SOI, et après la réalisation du guide d'onde supérieur.

### EXPOSÉ DE L'INVENTION

L'invention a pour objectif de remédier au moins en partie aux inconvénients de l'art antérieur, et plus particulièrement de proposer un procédé de fabrication d'un système optoélectronique comportant un dispositif optique couplé par un guide d'onde intermédiaire à un circuit photonique intégré, dont le guide d'onde intermédiaire présente les dimensions voulues, et dont les risques de dégradation des performances attendues du système optoélectronique sont réduits.

Pour cela, l'objet de l'invention est un procédé de fabrication d'un système optoélectronique en photonique sur silicium comportant un dispositif optique et un circuit photonique intégré, le dispositif optique comportant un guide d'onde dit supérieur, le circuit photonique intégré comportant un guide d'onde dit inférieur en silicium monocristallin s'étendant dans un plan inférieur, le guide d'onde supérieur étant couplé optiquement au guide d'onde inférieur par un guide d'onde dit intermédiaire en silicium s'étendant dans un plan intermédiaire distinct et parallèle au plan inférieur.

Le procédé comporte les étapes suivantes : fourniture d'un premier substrat SOI de type silicium sur isolant et comportant une première couche mince de silicium monocristallin d'une première épaisseur e1 et présentant une première face dite face arrière orientée vers une couche d'oxyde enterré du premier substrat SOI et une deuxième face opposée dite face avant ; réalisation du guide d'onde inférieur par gravure localisée de la première couche mince de silicium ; puis réalisation du guide d'onde intermédiaire ; puis réalisation du guide d'onde supérieur du dispositif optique.

Selon l'invention, l'étape de réalisation du guide d'onde intermédiaire comporte les opérations suivantes : assemblage au premier substrat SOI d'un deuxième substrat SOI de type silicium sur isolant et comportant une deuxième couche mince de silicium monocristallin d'une deuxième épaisseur e2 différente de e1, la deuxième couche mince de silicium étant située en regard du circuit photonique intégré ; retrait d'un substrat support et d'une couche d'oxyde enterré du deuxième substrat SOI, de manière à libérer une face de la deuxième couche mince de silicium ; réalisation du guide d'onde intermédiaire par gravure localisée de la deuxième couche mince de silicium (autrement dit, la deuxième couche mince de silicium, gravée localement, forme le guide d'onde intermédiaire).

Certains aspects préférés mais non limitatifs de ce procédé de fabrication sont les suivants.

Le guide d'onde intermédiaire peut être en partie superposé aux guides d'onde inférieur et supérieur, suivant un axe orthogonal aux plans en question. Plus précisément, il peut comporter une partie superposée au guide d'onde inférieure, et une autre partie superposée au guide d'onde supérieure.

Le guide d'onde inférieur peut présenter une épaisseur homogène égale à la valeur e1, et le guide d'onde intermédiaire peut présenter une épaisseur homogène égale à la valeur e2.

Le deuxième substrat SOI peut être assemblé par collage moléculaire oxyde/oxyde au premier substrat SOI, une couche mince de collage à base d'un oxyde étant déposée sur la deuxième couche mince de silicium, et une couche mince d'oxyde recouvrant le circuit photonique intégré, l'assemblage étant effectué par mise au contact de la couche mince de collage avec la couche mince d'oxyde.

La couche mince d'oxyde peut être réalisée par amincissement de la couche d'oxyde enterré du premier substrat SOI.

Le procédé peut comporter, à la suite de la réalisation du circuit photonique intégré comportant des composants optiques actifs, une étape de réalisation, du côté de la face avant, d'une partie d'interconnexion comportant des niveaux de métallisation connectés aux composants optiques actifs par des vias conducteurs s'étendant au travers d'une couche isolante inter-métal.

Le procédé peut comporter, à la suite de la réalisation de la partie d'interconnexion, des étapes d'assemblage d'une poignée à une face libre de la partie d'interconnexion, puis de retrait d'un substrat support du premier substrat SOI, puis d'amincissement de la couche d'oxyde enterré pour obtenir une couche amincie d'oxyde enterré.

La couche mince d'oxyde peut être réalisée par dépôt d'un oxyde sur le circuit photonique intégré du côté de la face avant

Le procédé peut comporter une étape de réalisation d'au moins un miroir de Bragg par formation d'échancrures traversantes dans la première couche mince de silicium remplies ensuite d'un matériau électriquement isolant, les échancrures traversantes étant réalisées de manière simultanée à la réalisation d'au moins un guide d'onde du circuit photonique intégré par une même étape de gravure localisée.

Le miroir de Bragg peut être au contact de la couche d'oxyde enterré du premier substrat SOI.

L'invention porte également sur un système optoélectronique en photonique sur silicium comportant un dispositif optique et un circuit photonique intégré : le dispositif optique comportant un guide d'onde dit supérieur ; le circuit photonique intégré comportant un guide d'onde dit inférieur en silicium monocristallin s'étendant dans un plan inférieur ; le guide d'onde supérieur étant couplé optiquement au guide d'onde inférieur par un guide d'onde dit intermédiaire en silicium s'étendant dans un plan intermédiaire distinct et parallèle au plan inférieur ; le guide d'onde intermédiaire étant réalisé en silicium monocristallin et comportant une partie superposée au guide d'onde inférieur et une autre partie superposée au guide d'onde supérieur, suivant une direction orthogonale aux plans intermédiaire et inférieur.

Le dispositif optique peut être choisi parmi un modulateur, une photodiode, un amplificateur optique à semiconducteur, ou une source laser où le guide d'onde supérieur est un guide d'onde actif contenant un milieu à gain. Le guide d'onde supérieur peut être réalisé en un matériau semiconducteur à base d'un composé III-V, d'un élément ou d'un composé IV, ou d'un composé II-VI. On se réfère ici aux colonnes du tableau périodique des éléments.

Le guide d'onde inférieur peut présenter une épaisseur e1 homogène inférieure à 350nm et le guide d'onde intermédiaire peut présenter une épaisseur e2 homogène comprise entre 400nm et 600nm.

Le système optoélectronique peut comporter au moins un miroir de Bragg réalisé à partir de silicium monocristallin et situé de manière coplanaire avec le guide d'onde inférieur.

Le miroir de Bragg peut s'étendre sous et le long du guide d'onde intermédiaire et être couplé de manière évanescente à celui-ci, le dispositif optique étant une source laser à rétroaction distribuée. En variante, le système optoélectronique peut comporter deux miroirs de Bragg situés sous le guide d'onde intermédiaire, le dispositif optique étant une source laser à réflecteur de Bragg distribué.

Le système optoélectronique peut comporter au moins une chaufferette, située du côté d'une face avant du circuit photonique intégré, en regard du miroir de Bragg, la chaufferette étant l'un des niveaux de métallisation d'une partie d'interconnexion comportant des niveaux de métallisation connectés à des composants optiques actifs du circuit photonique intégré par des vias conducteurs s'étendant au travers d'une couche isolante inter-métal.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

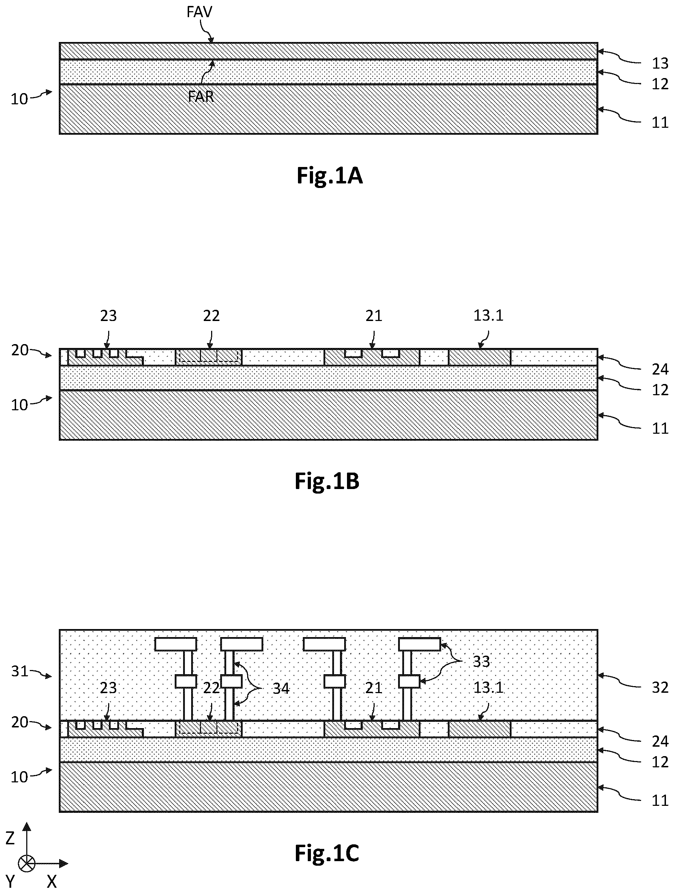

les figures 1A à 1I sont des vues en coupe, schématiques et partielles, illustrant différentes étapes d'un procédé de fabrication d'un système optoélectronique selon un premier mode de réalisation où le dispositif optique est une source laser, dans lequel le guide d'onde actif de la source laser est situé du côté de la face arrière FAR du circuit photonique intégré ;

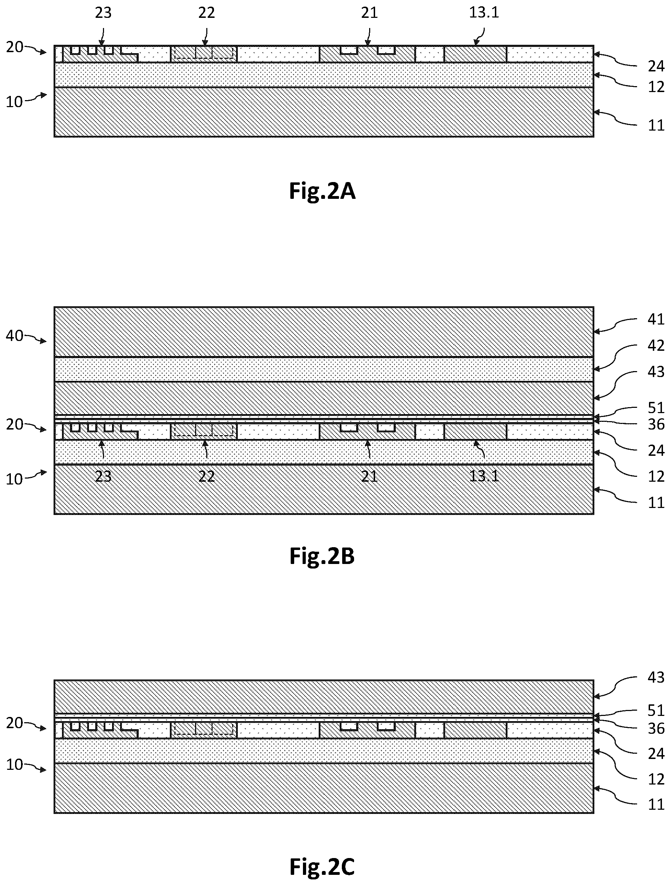

les figures 2A à 2F sont des vues en coupe, schématiques et partielles, illustrant différentes étapes d'un procédé de fabrication d'un système optoélectronique selon un deuxième mode de réalisation, dans lequel le guide d'onde actif de la source laser est situé du côté de la face avant FAV du circuit photonique intégré ;

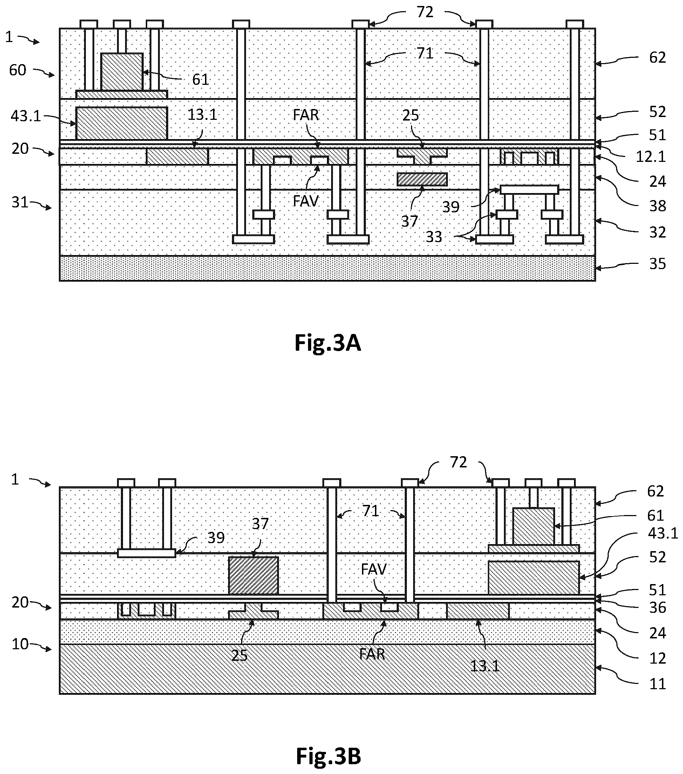

les figures 3A et 3B sont des vues en coupe, schématiques et partielles, de différents systèmes optoélectroniques selon des variantes de réalisation comportant au moins un guide d'onde à base d'un nitrure de silicium et au moins une chaufferette, dans des configurations du guide d'onde actif situé en face arrière FAR (fig.3A) et en face avant FAV (fig.3B) ;

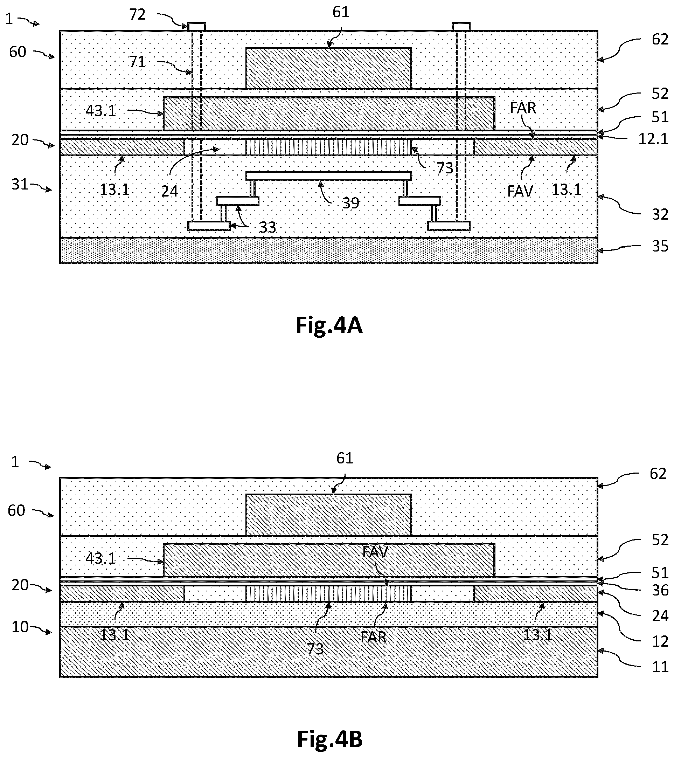

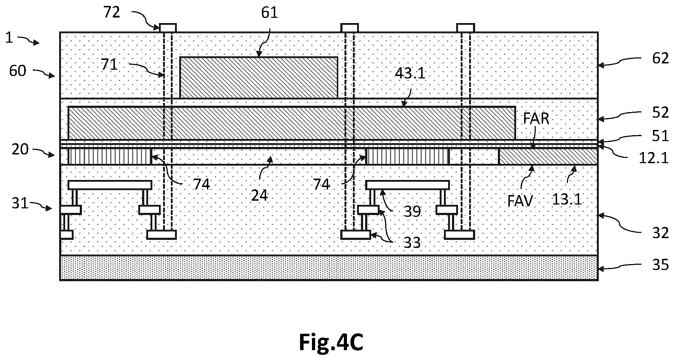

les figures 4A à 4C sont des vues en coupe, schématiques et partielles, de différents systèmes optoélectroniques selon des variantes de réalisation où la source laser est de type DFB en configuration 'guide d'onde actif en face arrière FAR' (fig.4A) et en configuration 'en face avant FAV' (fig.4B), et où la source laser est de type DBR en configuration 'face arrière FAR' (fig.4C).

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un système optoélectronique et son procédé de fabrication, le système optoélectronique comportant un dispositif optique et un circuit photonique intégré couplés optiquement l'un à l'autre par un guide d'onde intermédiaire en silicium monocristallin. Le dispositif otique comporte un guide d'onde dit supérieur contenant le milieu à gain, et le circuit photonique intégré comporte un guide d'onde inférieur en silicium monocristallin et au moins un composant optique actif ou passif (guide d'onde, modulateur, photodiode, coupleur...). Selon l'invention, les guides d'onde supérieur et inférieur sont couplés l'un à l'autre par un guide d'onde intermédiaire en silicium monocristallin. Le guide d'onde inférieur s'étend (i.e. s'étend longitudinalement, suivant sa longueur) dans un plan dit inférieur, et le guide d'onde intermédiaire s'étend (i.e. longitudinalement) dans un plan dit intermédiaire distinct et parallèle au plan inférieur. Par ailleurs, le guide d'onde supérieur s'étend ici également dans un plan (dit supérieur) distinct et parallèle aux plans inférieur et intermédiaire. Le dispositif optique peut notamment être une source laser hybride, un modulateur, une photodiode, un amplificateur optique à semiconducteur.

De plus, le circuit photonique intégré et son guide d'onde inférieur sont réalisés à partir de la couche mince de silicium monocristallin d'un premier substrat SOI. Le guide d'onde intermédiaire est réalisé à partir de la couche mince de silicium monocristallin d'un deuxième substrat SOI, lequel a été assemblé au premier substrat SOI. Ainsi, le guide d'onde inférieur présente une épaisseur e1 qui dépend du bon fonctionnement et des performances du ou des composants optiques du circuit photonique intégré, et le guide d'onde intermédiaire présente une épaisseur e2, différente de e1, choisie pour optimiser le couplage optique avec le guide d'onde supérieur. De préférence, l'épaisseur e2 est supérieure strictement à l'épaisseur e1, en particulier lorsque le dispositif optique est une source laser. Ce guide d'onde intermédiaire a ainsi été réalisé sans avoir recours à des opérations de dépôt de silicium amorphe et de planarisation par polissage mécano-chimique. Il présente ainsi les dimensions voulues, en particulier une épaisseur homogène, ce qui permet de réduire les risques de dégradation des performances du système optoélectronique. L'épaisseur est définie suivant l'axe vertical Z, qui est orthogonal aux plans dans lesquels les guides d'onde s'étendent longitudinalement.

Les figures 1A à 1I illustrent, de manière schématique, des étapes d'un procédé de fabrication d'un système optoélectronique 1 selon un premier mode de réalisation. Dans la suite de la description, le dispositif optique est une source laser hybride. Le guide d'onde supérieur est appelé guide d'onde actif et comporte un milieu à gain. Dans cet exemple, le guide d'onde actif 61 de la source laser 60 est situé du côté de la face arrière FAR du circuit photonique intégré 20. Par ailleurs, à titre illustratif, la source laser 60 est de type III-V/Si dans le sens où le guide d'onde actif 61 est réalisé à base d'un composé III-V, et que le circuit photonique intégré 20 est réalisé à base de silicium. Notons toutefois que le guide d'onde supérieur 61 peut être réalisé à base d'un composé III-V, par exemple à base d'InP ou de GaAs, à base d'un élément IV comme le germanium ou d'un composé IV comme le GeSn et le SiGe, ou à base d'un composé II-VI comme le CdHgTe.

On définit ici et pour la suite de la description un repère direct tridimensionnel orthogonal XYZ, où le plan XY est un plan parallèle au plan principal du circuit photonique intégré 20, et où l'axe Z est orienté du circuit photonique intégré 20 vers le guide d'onde actif 61 de la source laser 60.

En référence à la fig.1A, on fournit un premier substrat 10 de type silicium sur isolant SOI (pour *Silicon On Insulator,* en anglais), formé d'un empilement suivant l'axe Z d'un substrat support 11 en silicium, d'une couche 12 d'oxyde enterré (BOX pour *Buried Oxide*) en un oxyde de silicium, et d'une couche mince 13 de silicium monocristallin. Cette couche mince de silicium 13 présente une première face dite face avant FAV et une deuxième face opposée dite face arrière FAR orientée vers la couche d'oxyde enterré. L'épaisseur e1 de la couche mince de silicium 13 est homogène et sa valeur est choisie pour assurer un bon fonctionnement des composants optiques passifs et actifs du circuit photonique intégré 20. A titre d'exemple, l'épaisseur e1 est inférieure ou égale à 350nm environ, par exemple comprise entre 170nm et 310nm environ, et est ici égale à 220nm environ.

En référence à la fig.1B, on réalise le circuit photonique intégré 20 à partir de la couche mince 13 de silicium monocristallin, par structuration (gravure localisée partielle ou totale) et éventuellement dopage par implantation ionique. Celui-ci comporte des composants optiques, dont le guide d'onde inférieur 13.1 ainsi qu'au moins un composant optique passif ou actif. A titre d'illustration, le circuit photonique intégré 20 comporte ici, outre le guide d'onde inférieur 13.1, un modulateur optique 21, une photodiode 22 (comportant par exemple du germanium épitaxié), et un coupleur à réseau 23.

Le guide d'onde inférieur 13.1 est réalisé par gravure localisée de toute l'épaisseur de la couche mince de silicium 13. Autrement dit, la couche mince 13 gravée localement forme le guide d'onde inférieur 13.1. Il présente donc une épaisseur homogène égale à la valeur e1. Aucune opération d'augmentation locale de son épaisseur n'est effectuée (dépôt, planarisation par polissage mécano-chimique...). Ainsi, on est assuré que le guide d'onde inférieur 13.1 présente effectivement les dimensions souhaitées. Enfin, on dépose une couche isolante 24 en un matériau électriquement isolant tel qu'un diélectrique, par exemple en un oxyde, de manière à remplir les espacements dans le plan XY entre les différents composants du circuit photonique intégré 20.

En référence à la fig.1C, on réalise une partie d'interconnexion 31 du circuit photonique intégré 20 formée de plusieurs niveaux de métallisation 33 et de vias conducteurs 34 s'étendant au travers d'une couche isolante 32. Cette partie d'interconnexion 31 est habituellement appelée BEOL (pour *Back End Of Line,* en anglais), et la couche isolante 32 est appelée diélectrique inter-métal (IMD, pour *Inter-Metal Dielectric,* en anglais).

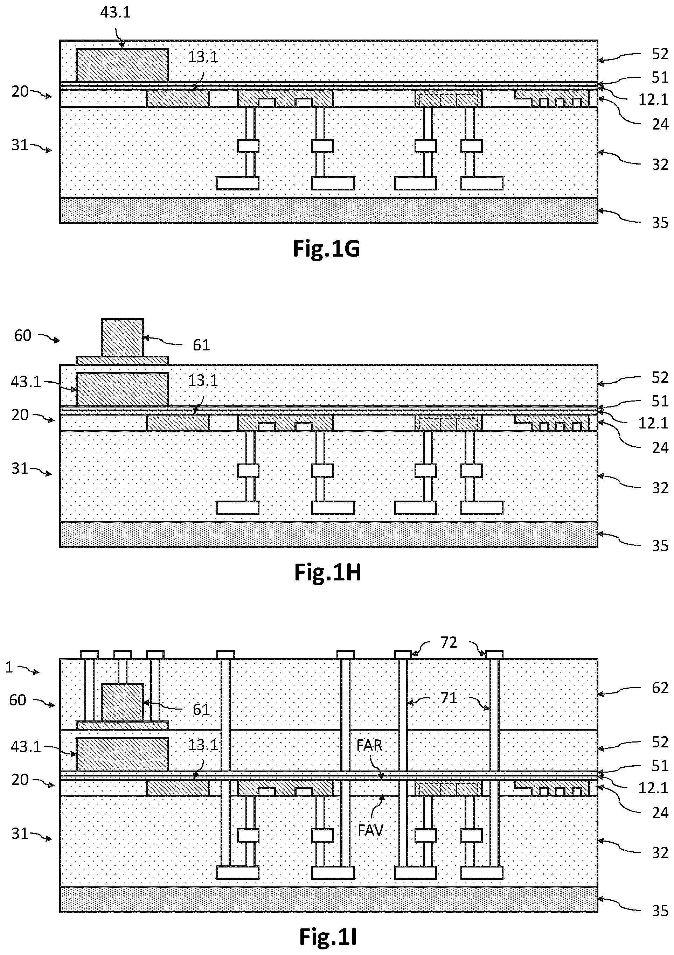

Cette étape est effectuée par des opérations de dépôt et de planarisation par polissage mécano-chimique de métal (par exemple cuivre) et de diélectrique (par exemple oxyde de silicium). Les niveaux de métallisation 33 et les vias conducteurs 34 permettent de connecter les composants optiques à des plots de contact 72 (cf. fig.1I) et peuvent également connecter les composants optiques entre eux.

Notons que l'un des niveaux de métallisation 33 peut être situé en regard du coupleur à réseau pour former un miroir métallique (non représenté) et ainsi améliorer l'extraction du faisceau lumineux. Par ailleurs, des niveaux de métallisation 33 peuvent être situés en regard des miroirs de Bragg pour former des chaufferettes permettant d'accorder la source laser 60 en longueur d'onde (cf. fig. 4A et 4C).

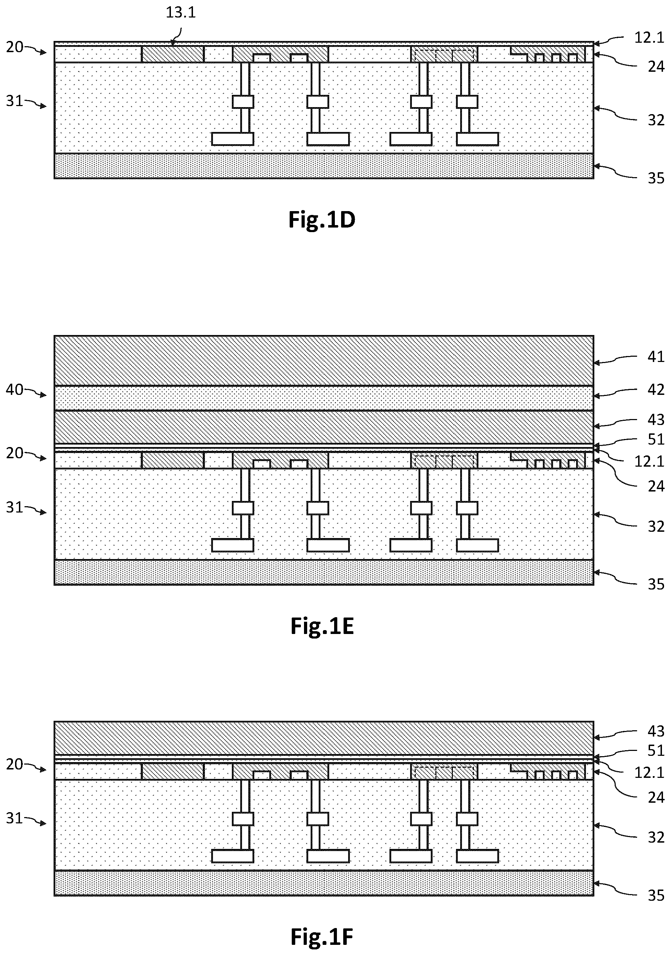

En référence à la fig.1D, on assemble une poignée 35 temporaire ou permanente à la face libre de la partie d'interconnexion 31. Cette poignée 35 peut être un substrat en silicium assemblé par collage. On retourne ensuite l'empilement, puis on retire le substrat support 11 du substrat SOI, par exemple par gravure chimique du silicium sélective à l'oxyde éventuellement précédée par un amincissement mécanique (*grinding* en anglais). Puis, on amincit la couche 12 d'oxyde enterré pour ne garder qu'une partie d'épaisseur par exemple de l'ordre de 50nm à 150nm. Cet amincissement peut être effectué par gravure chimique, gravure sèche ou encore par polissage mécano-chimique (CMP). Ainsi, la couche amincie 12.1 d'oxyde enterré assure une protection des composants optiques du circuit photonique intégré 20 et permettra le collage moléculaire de type oxyde-oxyde du deuxième substrat SOI 40. Notons que la couche amincie 12.1 d'oxyde enterré présente une épaisseur homogène dans le plan XY dans la mesure où, d'une part le substrat support 11 présentait initialement une épaisseur homogène, et d'autre part le retrait du substrat support 11 a été effectué par une gravure du silicium sélective à l'oxyde.

En référence à la fig.1E, on assemble un deuxième substrat SOI 40 sur l'empilement préalablement obtenu, et ici sur la face libre de la couche amincie 12.1 d'oxyde enterré. Le substrat SOI 40 est orienté de sorte que la couche mince 43 de silicium monocristallin est située en regard du circuit photonique intégré 20. L'assemblage peut être effectué par exemple par collage moléculaire de type oxyde-oxyde, une couche mince 51 de collage en un oxyde ayant été déposée sur le substrat SOI 40.

Le deuxième substrat 40 est donc également de type silicium sur isolant, et est formé d'un empilement d'un substrat support 41 en silicium, d'une couche 42 d'oxyde enterré en un oxyde de silicium, et d'une couche mince 43 de silicium monocristallin. Cette couche mince de silicium 43 présente une épaisseur e2 dont la valeur est différente de la valeur e1 et de préférence supérieure à e1 pour optimiser le couplage optique entre le guide d'onde intermédiaire 43.1 et le guide d'onde actif 61, et est adaptée à optimiser le couplage optique avec le guide d'onde actif 61. A titre d'exemple, l'épaisseur e2 est supérieure à 350nm, par exemple comprise entre 400 à 600nm environ, et est ici égale à 500nm environ. La couche mince de collage 51 est déposée sur la face libre de la couche mince de silicium 43, et le substrat SOI 40 est assemblé à l'empilement préalablement obtenu en mettant en contact la couche mince de collage 51 avec la couche amincie 12.1 d'oxyde enterré. Ainsi, la couche mince de silicium 43 est orientée vers le circuit photonique intégré 20.

La couche mince de collage 51 et la couche amincie 12.1 d'oxyde enterré présentent une épaisseur cumulée adaptée à optimiser le couplage optique entre le guide d'onde inférieur 13.1 et le guide d'onde intermédiaire 43.1, et est par exemple comprise entre 50nm et 300nm environ. Cette épaisseur est homogène dans le plan XY puisqu'elle est définie par les deux couches minces 51, 12.1 réalisées de manière contrôlée. Par ailleurs, on est en mesure d'ajuster l'épaisseur locale de la couche mince de collage 51 pour compenser une éventuelle variation spatiale de l'épaisseur locale de la couche amincie 12.1 d'oxyde enterré. Notons que la couche mince de collage 51 peut également être formée par oxydation d'une partie de l'épaisseur de la couche mince de silicium 43, bien qu'il reste préférable qu'il s'agisse d'une couche mince déposée.

Par ailleurs que le substrat SOI 40 peut être une plaque (*wafer* en anglais) par exemple de diamètre supérieur à quelques dizaines voire centaines de millimètres. En variante, et de préférence, il peut être une vignette, c'est-à-dire une partie d'une plaque, pour ainsi réduire les coûts et également limiter les contraintes mécaniques subies par l'empilement des deux substrats SOI 10, 40 assemblés l'un à l'autre.

En référence à la fig.1F, on retire le substrat support 41 ainsi que la couche 42 d'oxyde enterré, comme décrit précédemment, pour déboucher sur la couche mince de silicium 43 et ainsi rendre libre sa surface. A ce stade, la couche mince de silicium 43 recouvre au moins en partie le circuit photonique intégré 20, et au moins le guide d'onde inférieur 13.1. Elle présente une épaisseur e2 dont la valeur sera celle du guide d'onde intermédiaire 43.1 (cf. fig.1G), cette épaisseur permettant d'optimiser le couplage optique de celui-ci avec le guide d'onde actif 61.

Notons que, dans le cas du report d'une vignette SOI 40, pour retirer le substrat support 41 et la couche d'oxyde enterré 42, il importe de ne pas dégrader les couches d'oxyde sous-jacentes. Pour cela, on peut déposer, après le report de la vignette 40, un film de SiN de manière peu conforme (par exemple par dépôt physique en phase vapeur par pulvérisation - *sputtering deposition* en anglais) pour protéger l'oxyde sous-jacent ainsi que la base de la vignette 40. On pourra alors procéder par exemple à un amincissement mécanique suivi d'une gravure chimique du substrat support 41 et de la couche d'oxyde enterré 42. La couche de SiN pourra ensuite être retirée chimiquement par une gravure sélective à l'oxyde.

En référence à la fig.1G, on réalise le guide d'onde intermédiaire 43.1 par photolithographie et gravure localisée de la couche mince de silicium 43. Autrement dit, la couche mince 43 gravée localement forme le guide d'onde intermédiaire 43.1. Pour cela, l'opération de photolithographie peut utiliser des mires d'alignement réalisées au préalable dans la couche mince de silicium 13 du substrat SOI 10. Ensuite, on grave localement la couche mince de silicium 43 sur toute son épaisseur pour déboucher sur la couche mince de collage 51. La gravure localisée peut utiliser un masque dur ou un masque résine.

Enfin, on dépose une couche d'encapsulation 52 en un matériau isolant, par exemple un matériau diélectrique tel qu'un oxyde, de manière à recouvrir le guide d'onde intermédiaire 43.1 et la couche mince de collage 51. Une planarisation de la couche d'encapsulation 52 permet d'obtenir une face libre plane. L'épaisseur locale de la couche d'encapsulation 52 au-dessus du guide d'onde intermédiaire 43.1 est choisie pour optimiser le couplage optique entre ce dernier et le guide d'onde actif 61. Elle peut être par exemple de l'ordre de 100nm.

En référence à la fig.1H, on réalise le guide d'onde actif 61 de la source laser 60. Cette étape peut être réalisée de manière identique ou similaire à celle décrite dans le document US10488587B2 mentionné précédemment. Ainsi, on peut coller sur la couche d'encapsulation 52 un empilement formant une hétérostructure à base du composé III-V, de préférence par report d'une vignette III-V. Le guide d'onde actif 61 est ensuite réalisé par des opérations classiques de photolithographie et de gravure localisée. Le guide d'onde actif 61 est positionné dans le plan XY de manière à autoriser un couplage optique avec le guide d'onde intermédiaire 43.1.

En référence à la fig.1I, on dépose une couche d'encapsulation 62 en un matériau isolant tel qu'un matériau diélectrique, par exemple un oxyde, de manière à recouvrir le guide d'onde actif 61. Puis, on réalise des vias conducteurs 71 et des plots de contact 72. Les vias conducteurs 71 traversent les couches d'oxyde et relient les plots de contact aux lignes de métallisation de la partie d'interconnexion 31. Ils assurent ainsi la connexion électrique avec le guide d'onde actif 61 d'une part, et avec le circuit photonique intégré 20 par l'intermédiaire de la partie d'interconnexion 31 d'autre part.

On obtient ainsi un système optoélectronique 1 en photonique sur silicium comportant une source laser hybride 60 et un circuit photonique intégré 20 couplés optiquement l'un à l'autre par un guide d'onde intermédiaire 43.1. Le guide d'onde inférieur 13.1 et le guide d'onde intermédiaire 43.1 sont tous deux réalisés en silicium monocristallin à partir de substrats SOI 10, 40 différents, et présentent des épaisseurs homogènes et différentes l'une de l'autre. Ainsi, le guide d'onde inférieur 13.1 présente donc une épaisseur e1 par exemple inférieure ou égale à 350nm environ, par exemple comprise entre 170nm et 310nm environ, et adaptée au bon fonctionnement des composants optiques du circuit photonique intégré 20. Et le guide d'onde intermédiaire 43.1 présente une épaisseur e2 par exemple comprise entre 400 et 600nm environ permettant un bon couplage optique avec le guide d'onde actif 61 de la source laser 60.

Le circuit photonique intégré 20 (avec son guide d'onde inférieur 13.1) a été réalisé à partir de la couche mince 13 de silicium monocristallin du premier substrat SOI 10, et le guide d'onde intermédiaire 43.1 a été réalisé à partir de la couche mince 43 de silicium monocristallin du deuxième substrat SOI 40 alors assemblé au premier substrat 10. Ce guide d'onde intermédiaire 43.1 n'a donc pas été réalisé au moyen d'opérations de dépôt de silicium amorphe et de planarisation par polissage mécano-chimique, de sorte qu'il présente effectivement les dimensions voulues (notamment une épaisseur e2 homogène). Ainsi, le procédé de fabrication ne présente pas une complexité accrue et permet d'obtenir un système optoélectronique 1 dont les performances n'ont pas été dégradées lors du procédé de fabrication.

Notons par ailleurs que ce mode de réalisation permet de ne pas modifier la filière technologique utilisée pour réaliser le circuit photonique intégré 20 et la partie d'interconnexion 31. En effet, l'étape de réalisation du guide d'onde intermédiaire 43.1 est effectuée une fois que la partie d'interconnexion 31 a été réalisée.

Dans cet exemple, les plots de contact de la source laser 60 ainsi que ceux du circuit photonique intégré 20 sont situés du côté de la face arrière FAR. En variante, les plots de contact du circuit photonique intégré 20 peuvent être placés du côté de la face avant FAV. Pour cela, on assemble une poignée à la couche d'encapsulation 62 et on retire la poignée 35, pour ensuite réaliser les plots de contact en question.

Par ailleurs, par souci de clarté on n'a pas représenté les miroirs de Bragg. Cependant, la source laser 60 peut être de type DBR comme de type DFB (cf. fig.4A à 4C), et le ou les miroirs de Bragg peuvent être réalisés à base de silicium monocristallin et être situés de manière coplanaire avec le guide d'onde inférieur 13.1, comme l'illustrent les fig. 4A à 4C.

Les figures 2A à 2F illustrent, de manière schématique, des étapes d'un procédé de fabrication d'un système optoélectronique 1 selon un deuxième mode de réalisation. Dans cet exemple, le guide d'onde actif 61 de la source laser 60 est situé du côté de la face avant FAV du circuit photonique intégré 20. Ce procédé permet d'éviter d'avoir recours à la poignée 35 et aux opérations de retournement de l'empilement réalisé. Il se distingue également de celui des fig.1A à 1I essentiellement en ce que le circuit photonique intégré 20 ne comporte pas de partie d'interconnexion 31 de type BEOL.

En référence à la fig.2A, on fournit le premier substrat SOI 10 et on réalise le circuit photonique intégré 20 à partir de la couche mince 13 de silicium monocristallin (cf. fig.1A). On dépose ensuite la couche isolante 24 pour remplir l'espacement entre les composants optiques 13.1, 21, 22, 23. Ces opérations sont identiques ou similaires à celles décrites en référence à la fig.1A, et ne sont pas détaillées à nouveau ici.

En référence à la fig.2B, on assemble le deuxième substrat SOI 40 à l'empilement obtenu de sorte que la couche mince 43 de silicium monocristallin soit orientée vers le circuit photonique intégré 20. Autrement dit, le substrat SOI 40 est orienté de sorte que la couche mince 43 est située en regard du circuit photonique intégré 20. L'assemblage peut être effectué par collage moléculaire ici de type oxyde-oxyde. Pour cela, une couche mince 36 de collage en oxyde est déposée sur le circuit photonique intégré 20, et une autre couche mince 51 de collage en oxyde est déposée sur la couche mince de silicium 43. Puis les deux couches minces 36, 51 de collage sont mises au contact l'une de l'autre. L'épaisseur cumulée des deux couches minces 36, 51 est homogène dans le plan XY, et est adaptée pour optimiser le couplage optique entre le guide d'onde intermédiaire 43.1 et le guide d'onde inférieur 13.1.

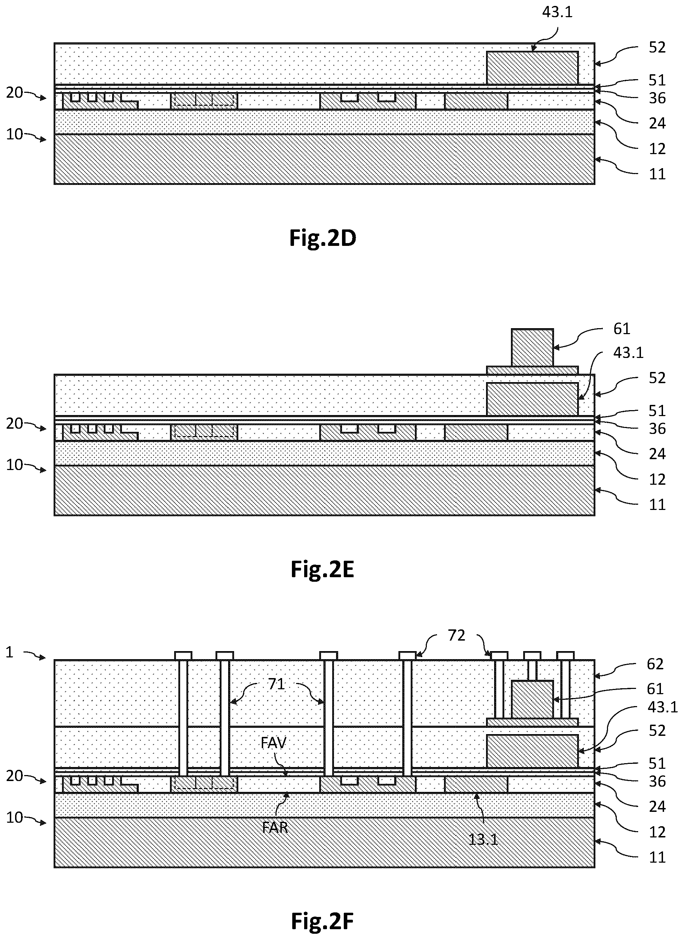

En référence aux fig. 2C, 2D et 2E, on retire le substrat support 41 ainsi que la couche 42 d'oxyde enterré pour déboucher sur la couche mince de silicium 43 et ainsi rendre libre sa surface. Puis, on réalise le guide d'onde intermédiaire 43.1 par photolithographie et gravure localisée de la couche mince de silicium 43. On dépose ensuite la couche d'encapsulation 52. On réalise ensuite le guide d'onde actif 61 à base d'un composé III-V. Ces étapes sont identiques ou similaires à celles décrites en référence aux fig. 1E à 1G.

En référence à la fig.2F, on dépose la couche d'encapsulation 62 de manière à recouvrir le guide d'onde actif 61. Puis, on réalise des vias conducteurs 71 et des plots de contact 72. Les vias conducteurs 71 assurent la connexion électrique du guide d'onde actif 61 d'une part, et des composants optiques du circuit photonique intégré 20 d'autre part. Ici, le système optoélectronique 1 ne comporte pas la partie d'interconnexion 31 de type BEOL qui assure, comme dans la fig.1I, la connexion électrique des composants optiques.

On obtient ainsi un système optoélectronique 1 comportant une source laser hybride 60 et un circuit photonique intégré 20 couplés optiquement l'un à l'autre par un guide d'onde intermédiaire 43.1, où le guide d'onde actif 61 est situé du côté de la face avant FAV du circuit photonique intégré 20. Ici également, le couplage optique entre le guide d'onde actif 61 et le guide d'onde inférieur 13.1 a lieu au moyen du guide d'onde intermédiaire 43.1 réalisé en silicium monocristallin, lequel est issu de la couche mince de silicium 43 du deuxième substrat SOI 40. Le guide d'onde intermédiaire 43.1 n'est donc pas réalisé à partir d'opérations de dépôt de silicium amorphe puis de planarisation par polissage mécano-chimique (sans que le procédé de fabrication ne soit complexifié), et présente donc les dimensions voulues, en particulier une épaisseur homogène dans le plan XY. Le système optoélectronique 1 présente donc les performances attendues, puisque le guide d'onde inférieur 13.1 présente l'épaisseur adaptée au bon fonctionnement des composants optiques, et que le guide d'onde intermédiaire 43.1 présente l'épaisseur optimisant le couplage optique avec le guide d'onde actif 61. Notons que ce mode de réalisation permet d'effectuer les différentes étapes toujours du même côté du circuit photonique intégré 20, à savoir du côté de sa face avant FAV. Il n'est pas nécessaire d'utiliser une poignée ni d'effectuer un retournement de l'empilement réalisé.

Les figures 3A et 3B sont des vues schématiques et partielles, en coupe, de deux systèmes optoélectroniques 1 selon des variantes de réalisation qui intègrent au moins un guide d'onde 37 à base d'un nitrure de silicium SiN ainsi qu'une chaufferette 39. Ces exemples sont donnés à titre illustratif et d'autres agencements sont bien entendu possibles.

En référence à la fig.3A, le système optoélectronique 1 est une variante de celui de la fig.1I, en ce sens que le guide d'onde actif 61 est situé du côté de la face arrière FAR du circuit photonique intégré 20. Dans cet exemple, un guide d'onde 37 à base de SiN est réalisé au niveau de la face avant FAV du circuit photonique intégré 20, avant la réalisation de la partie d'interconnexion 31. Ce guide d'onde 37 est ici situé dans une couche isolante 38, et est ici espacé d'un guide d'onde 25 en silicium suivant l'axe Z d'une distance autorisant ici le couplage optique entre ces guides d'onde 25, 37. Par ailleurs, une chaufferette 39 est réalisée ici en regard d'un autre guide d'onde en silicium, et est connectée à la partie d'interconnexion 31. Cette chaufferette est ici l'un des niveaux de métallisation 33. Le guide d'onde 37 peut notamment être réalisé après le dépôt de la couche isolante 38, par remplissage d'une échancrure réalisée de celle-ci.

En référence à la fig.3B, le système optoélectronique 1 est une variante de celui de la fig.2F, en ce sens que le guide d'onde actif 61 est situé du côté de la face avant FAV du circuit photonique intégré 20. Dans cet exemple, un guide d'onde 37 à base de SiN est réalisé au niveau de la face avant FAV du circuit photonique intégré 20, dans la couche isolante 52 encapsulant le guide d'onde intermédiaire 43.1. Il est ici espacé du guide d'onde en silicium 25 de l'épaisseur cumulée des deux couches minces 36, 51 de collage, mais peut en variante être espacé en plus d'une portion de la couche d'encapsulation 52. Par ailleurs, une chaufferette 39 est réalisée ici en regard d'un autre guide d'onde en silicium, et en est espacée par au moins une partie de la couche d'encapsulation 52. Notons que le guide d'onde 37 peut être réalisé après le dépôt de la couche d'encapsulation 52, par remplissage d'une échancrure réalisée de celle-ci. Cependant, l'espacement suivant l'axe Z entre le guide d'onde 37 et le guide d'onde en silicium 25 sous-jacent peut ne pas être contrôlé de manière précise. En variante, le guide d'onde 37 peut être réalisé par un procédé soustractif : lorsque le guide d'onde intermédiaire 43.1 est réalisé et avant le dépôt de la couche d'encapsulation 52, on effectue un dépôt pleine plaque de SiN que l'on grave ensuite localement pour former le guide d'onde 37. On dépose ensuite la couche d'encapsulation 52. A noter que des espaceurs en SiN peuvent être formés sur les flancs du guide d'onde intermédiaire 43.1, ces espaceurs pourront être retirés chimiquement (en veillant à bien protéger le guide d'onde 37).

Les figures 4A à 4C sont des vues schématiques et partielles, en coupe, de systèmes optoélectroniques 1 selon des variantes de réalisation qui intègrent au moins un miroir de Bragg, qui peuvent être similaires aux exemples des fig.3A et 3B.

Dans l'exemple de la fig.4A, le système optoélectronique 1 est similaire à celui de la fig.1I en ce qu'il comporte une partie d'interconnexion 31 réalisée en face avant FAV et que le guide d'onde actif 61 est situé en face arrière FAR du circuit photonique intégré 20. La source laser 60 est ici de type DFB, et comporte un miroir de Bragg 73 qui s'étend sous le guide d'onde intermédiaire 43.1 (et donc également sous le guide d'onde actif 61) et définit la cavité optique. Le miroir de Bragg 73 n'est donc pas situé dans un plan situé entre le guide d'onde actif 61 et le guide d'onde inférieur 13.1.

Le miroir de Bragg 73 est réalisé à partir de la couche mince 13 de silicium monocristallin du premier substrat SOI, et est donc coplanaire avec le guide d'onde inférieur 13.1. Il est en particulier réalisé en effectuant une série d'échancrures par exemple traversantes dans la couche mince 13 de silicium monocristallin, ces échancrures étant ensuite remplies par le matériau diélectrique de la couche isolante 24. La réalisation des échancrures du miroir de Bragg 73 peut être effectuée en même temps que la réalisation d'au moins un guide d'onde du circuit photonique intégré 20, lors d'une seule étape de gravure localisée.

Par ailleurs, le fait que les échancrures soient traversantes (et donc que le matériau isolant s'étende sur toute l'épaisseur de la couche mince 13) permet de rendre le procédé plus robuste. En effet, on se distingue d'une situation de l'art antérieur où le miroir de Bragg serait situé à proximité du guide d'onde actif. Les dents du miroir de Bragg sont alors réalisées par gravure partielle de la couche mince de silicium, par exemple sur une profondeur de l'ordre de 10nm voire de quelques dizaines de nanomètres. En revanche, dans l'exemple des fig.4A à 4C, les dents du miroir de Bragg 73 (comme celles des miroirs 74) s'étendent sur toute l'épaisseur de la couche mince 13 (dans les échancrures traversantes) dans la mesure où le miroir de Bragg 73 (et les miroirs 74) est plus éloigné du guide d'onde actif 61, ceci à force du miroir de Bragg équivalente.

Par ailleurs, dans cet exemple, une chaufferette 39 est réalisée en regard du miroir de Bragg 33 (du côté de la face FAV), et est connectée à la partie d'interconnexion 31 (elle correspond ici à l'un des niveaux de métallisation 33). Elle permet d'accorder en longueur d'onde la source laser 60.

Dans l'exemple de la fig.4B, le système optoélectronique 1 est similaire à celui de la fig.4A en ce sens que la source laser 60 est de type DFB, mais le guide d'onde actif 61 est situé du côté de la face avant FAV du circuit photonique intégré 20. Il peut être réalisé par un procédé similaire à celui décrit en référence aux fig.2A à 2F. Comme sur la fig.4A, le miroir de Bragg 73 est réalisé à partir de la couche mince 13 de silicium monocristallin du premier substrat 10, et est donc coplanaire avec le guide d'onde inférieur 13.1. Il est donc en contact avec la couche 12 d'oxyde enterré du premier substrat SOI 10. Dans cet exemple, le système optoélectronique 1 ne comporte donc pas de chaufferette d'accordabilité situé en regard du miroir de Bragg 73.

Dans l'exemple de la fig.4C, le système optoélectronique 1 est similaire à celui de la fig.4A en ce sens que le guide d'onde actif 61 est situé du côté de la face arrière FAR du circuit photonique intégré 20. En revanche, la source laser 60 est de type DBR. Ainsi, la source laser 60 comporte deux miroirs de Bragg 74 qui s'étendent sous le guide d'onde intermédiaire 43.1 et définissent la cavité optique. Le mode optique est guidé dans le guide d'onde intermédiaire 43.1 et est couplé optiquement par évanescence aux miroirs de Bragg 74. Les miroirs de Bragg 74 sont réalisés à partir de la couche mince 13 de silicium monocristallin du premier substrat SOI 10, et sont donc coplanaires entre eux et avec le guide d'onde inférieur 13.1.

Bien entendu, en variante, le système optoélectronique 1 peut également comporter une source laser 60 de type DBR avec une configuration où le guide d'onde actif 61 est situé du côté de la face avant FAV du circuit photonique intégré 20.

Des modes de réalisation particuliers viennent d'être décrits. Différentes variantes et modifications apparaîtront à l'homme du métier.

## Revendications

1. Procédé de fabrication d'un système optoélectronique (1) en photonique sur silicium comportant un dispositif optique (60) et un circuit photonique intégré (20), le dispositif optique (60) comportant un guide d'onde (61) dit supérieur, le circuit photonique intégré (20) comportant un guide d'onde (13.1) dit inférieur en silicium monocristallin s'étendant dans un plan inférieur, le guide d'onde supérieur (61) étant couplé optiquement au guide d'onde inférieur (13.1) par un guide d'onde (43.1) dit intermédiaire en silicium s'étendant dans un plan intermédiaire distinct et parallèle au plan inférieur, le procédé comportant les étapes suivantes :
∘ fourniture d'un premier substrat SOI (10) de type silicium sur isolant et comportant une première couche mince (13) de silicium monocristallin d'une première épaisseur e1 et présentant une première face dite face arrière orientée vers une couche (12) d'oxyde enterré du premier substrat SOI (10) et une deuxième face opposée dite face avant ;
∘ réalisation du guide d'onde inférieur (13.1) par gravure localisée de la première couche mince (13) de silicium ; puis
∘ réalisation du guide d'onde intermédiaire (43.1) ; puis
∘ réalisation du guide d'onde supérieur (61) du dispositif optique (60) ;
∘ dans lequel l'étape de réalisation du guide d'onde intermédiaire (43.1) comporte les opérations suivantes :
• assemblage au premier substrat SOI (10) d'un deuxième substrat SOI (40) de type silicium sur isolant et comportant une deuxième couche mince (43) de silicium monocristallin d'une deuxième épaisseur e2 différente de e1, la deuxième couche mince (43) de silicium monocristallin étant située en regard du circuit photonique intégré (20) ;
• retrait d'un substrat support (41) et d'une couche (42) d'oxyde enterré du deuxième substrat SOI (40), de manière à libérer une face de la deuxième couche mince (43) de silicium monocristallin;
• réalisation du guide d'onde intermédiaire (43.1) par gravure localisée de la deuxième couche mince (43) de silicium monocristallin.

2. Procédé de fabrication selon la revendication 1, dans lequel le guide d'onde intermédiaire (43.1) est en partie superposé aux guides d'onde inférieur (13.1) et supérieur (61).

3. Procédé de fabrication selon la revendication 1 ou 2, dans lequel le guide d'onde inférieur (13.1) présente une épaisseur homogène égale à la valeur e1, et le guide d'onde intermédiaire (43.1) présente une épaisseur homogène égale à la valeur e2.

4. Procédé de fabrication selon l'une quelconque des revendications 1 à 3, dans lequel le deuxième substrat SOI (40) est assemblé par collage moléculaire oxyde/oxyde au premier substrat SOI (10), une couche mince de collage (51) à base d'un oxyde étant déposée sur la deuxième couche mince (43) de silicium monocristallin, et une couche mince d'oxyde (12.1 ; 36) recouvrant le circuit photonique intégré (20), l'assemblage étant effectué par mise au contact de la couche mince de collage (51) avec la couche mince d'oxyde (12.1 ; 36).

5. Procédé de fabrication selon la revendication 4, dans lequel la couche mince d'oxyde (12.1) est réalisée par amincissement de la couche (12) d'oxyde enterré du premier substrat SOI (10).

6. Procédé de fabrication selon la revendication 5, comportant, à la suite de la réalisation du circuit photonique intégré (20) comportant des composants optiques actifs (21, 22), une étape de réalisation, du côté de la face avant, d'une partie d'interconnexion (31) comportant des niveaux de métallisation (33) connectés aux composants optiques actifs (21, 22) par des vias conducteurs (34) s'étendant au travers d'une couche isolante inter-métal (32).

7. Procédé de fabrication selon la revendication 6, comportant, à la suite de la réalisation de la partie d'interconnexion (31), des étapes d'assemblage d'une poignée (35) à une face libre de la partie d'interconnexion (31), puis de retrait d'un substrat support (11) du premier substrat SOI (10), puis d'amincissement de la couche (12) d'oxyde enterré pour obtenir une couche amincie (12.1) d'oxyde enterré.

8. Procédé de fabrication selon la revendication 4, dans lequel la couche mince d'oxyde (36) est réalisée par dépôt d'un oxyde sur le circuit photonique intégré (20) du côté de la face avant.

9. Procédé de fabrication selon l'une quelconque des revendications 1 à 8, comportant une étape de réalisation d'au moins un miroir de Bragg (73 ; 74) par formation d'échancrures traversantes dans la première couche mince (13) de silicium remplies ensuite d'un matériau électriquement isolant, les échancrures traversantes étant réalisées de manière simultanée à la réalisation d'au moins un guide d'onde du circuit photonique intégré (20) par une même étape de gravure localisée.

10. Système optoélectronique (1) en photonique sur silicium comportant un dispositif optique (60) et un circuit photonique intégré (20) :
∘ le dispositif optique (60) comportant un guide d'onde (61) dit supérieur ;
∘ le circuit photonique intégré (20) comportant un guide d'onde (13.1) dit inférieur en silicium monocristallin, s'étendant dans un plan inférieur ;
∘ le guide d'onde supérieur (61) étant couplé optiquement au guide d'onde inférieur (13.1) par un guide d'onde (43.1) dit intermédiaire en silicium, s'étendant dans un plan intermédiaire distinct et parallèle au plan inférieur ;
∘ **caractérisé en ce que** le guide d'onde intermédiaire (43.1) est réalisé en silicium monocristallin, et **en ce que** le guide d'onde intermédiaire (43.1) comporte une partie superposée au guide d'onde inférieur (13.1) et une autre partie superposée au guide d'onde supérieur (61), suivant une direction orthogonale aux plans intermédiaire et inférieur.

11. Système optoélectronique selon la revendication 10, le dispositif optique (60) étant choisi parmi un modulateur, une photodiode, un amplificateur optique à semiconducteur, ou une source laser où le guide d'onde supérieur (61) est un guide d'onde actif contenant un milieu à gain, le guide d'onde supérieur étant réalisé à partir d'un matériau semiconducteur à base d'un composé III-V, d'un élément ou d'un composé IV, ou d'un composé II-VI.

12. Système optoélectronique selon la revendication 10 ou 11, dans lequel le guide d'onde inférieur (13.1) présente une épaisseur e1 homogène inférieure à 350nm et le guide d'onde intermédiaire (43.1) présente une épaisseur e2 homogène comprise entre 400nm et 600nm.

13. Système optoélectronique selon l'une quelconque des revendications 10 à 12, comportant au moins un miroir de Bragg réalisé à partir de silicium monocristallin et situé de manière coplanaire avec le guide d'onde inférieur (13.1).

14. Système optoélectronique selon la revendication 13, dans lequel le miroir de Bragg (73) s'étend sous et le long du guide d'onde intermédiaire (43.1) et est couplé de manière évanescente à celui-ci, le dispositif optique (60) étant une source laser à rétroaction distribuée ; ou comportant deux miroirs de Bragg (74) situés sous le guide d'onde intermédiaire (43.1), le dispositif optique (60) étant une source laser à réflecteur de Bragg distribué.

15. Système optoélectronique selon la revendication 14, comportant au moins une chaufferette (39), située du côté d'une face avant du circuit photonique intégré (20), en regard du miroir de Bragg (73 ; 74), la chaufferette étant l'un des niveaux de métallisation (33) d'une partie d'interconnexion (31) comportant des niveaux de métallisation (33) connectés à des composants optiques actifs (21, 22) du circuit photonique intégré (20) par des vias conducteurs (34) s'étendant au travers d'une couche isolante inter-métal (32).

## Patentansprüche

1. Verfahren zur Herstellung eines optoelektronischen Systems (1) in der Silizium-Photonik, aufweisend eine optische Vorrichtung (60) und einen photonischen integrierten Schaltkreis (20), wobei die optische Vorrichtung (60) einen oberen Wellenleiter (61) aufweist, wobei der photonische integrierte Schaltkreis (20) einen unteren Wellenleiter (13.1) aus monokristallinem Silizium aufweist, der sich in einer unteren Ebene erstreckt, wobei der obere Wellenleiter (61) optisch mit dem unteren Wellenleiter (13.1) durch einen Zwischenwellenleiter (43.1) aus Silizium gekoppelt ist, der sich in einer separaten, zu der unteren Ebene parallelen Zwischenebene erstreckt, wobei das Verfahren die folgenden Schritte aufweist:
∘ Bereitstellen eines ersten SOI-Substrats (10) vom Typ Silizium auf Isolator und aufweisend eine erste Dünnschicht (13) aus monokristallinem Silizium einer ersten Dicke e1 und aufweisend eine erste Seite, bezeichnet als Rückseite, die zu einer vergrabenen Oxidschicht (12) des ersten SOI-Substrats (10) ausgerichtet ist, und eine zweite gegenüberliegende Seite, bezeichnet als Vorderseite;
° Realisieren des unteren Wellenleiters (13.1) durch lokalisiertes Ätzen der ersten Siliziumdünnschicht (13); dann
∘ Realisieren des Zwischenwellenleiters (43.1); dann
∘ Realisieren des oberen Wellenleiters (61) der optischen Vorrichtung (60);
∘ wobei der Realisierungsschritt des Zwischenwellenleiters (43.1) die folgenden Vorgänge aufweist:
• Verbinden eines zweiten SOI-Substrats (40) vom Typ Silizium auf Isolator mit dem ersten SOI-Substrat (10) und aufweisend eine zweite Dünnschicht (43) aus monokristallinem Silizium mit einer von e1 verschiedenen zweiten Dicke e2, wobei sich die zweite Dünnschicht (43) aus monokristallinem Silizium dem photonischen integrierten Schaltkreis (20) zugewandt befindet;
• Entfernen eines Trägersubstrats (41) und einer vergrabenen Oxidschicht (42) von dem zweiten SOI-Substrat (40), so dass eine Seite der zweiten Dünnschicht (43) aus monokristallinem Silizium freigelegt wird;
• Realisieren des Zwischenwellenleiters (43.1) durch lokalisiertes Ätzen der zweiten Dünnschicht (43) aus monokristallinem Silizium.

2. Herstellungsverfahren nach Anspruch 1, wobei der Zwischenwellenleiter (43.1) teilweise dem unteren (13.1) und oberen (61) Wellenleiter überlagert ist.

3. Herstellungsverfahren nach Anspruch 1 oder 2, wobei der untere Wellenleiter (13.1) eine homogene Dicke aufweist, die dem Wert e1 entspricht, und der Zwischenwellenleiter (43.1) eine homogene Dicke aufweist, die dem Wert e2 entspricht.

4. Herstellungsverfahren nach einem der Ansprüche 1 bis 3, wobei das zweite SOI-Substrat (40) durch molekulare Oxid-Oxid-Verklebung von Oxid/Oxid mit dem ersten SOI-Substrat (10) verbunden ist, wobei eine dünne Klebeschicht (51) auf Basis eines Oxids auf der zweiten Dünnschicht (43) aus monokristallinem Silizium aufgebracht ist und eine dünne Oxidschicht (12.1; 36) den photonischen integrierten Schaltkreis (20) abdeckt, wobei die Verbindung durch Inkontaktbringen der dünnen Klebeschicht (51) mit der dünnen Oxidschicht (12.1; 36) erfolgt.

5. Herstellungsverfahren nach Anspruch 4, wobei die dünne Oxidschicht (12.1) durch Ausdünnen der vergrabenen Oxidschicht (12) des ersten SOI-Substrats (10) realisiert wird.

6. Herstellungsverfahren nach Anspruch 5, das im Anschluss an die Realisierung des photonischen integrierten Schaltkreises (20), der aktive optische Komponenten (21, 22) aufweist, einen Schritt des Realisierens eines Verbindungsteils (31) auf der Seite der Vorderseite aufweist, der Metallisierungsebenen (33) aufweist, die mit den aktiven optischen Komponenten (21, 22) durch leitfähige Vias (34) verbunden sind, die sich durch eine Zwischenmetall-Isolierschicht (32) erstrecken.

7. Herstellungsverfahren nach Anspruch 6, das im Anschluss an die Realisierung des Verbindungsteils (31) Schritte des Verbindens eines Griffs (35) mit einer freien Seite des Verbindungsteils (31), dann das Entfernen eines Trägersubstrats (11) von dem ersten SOI-Substrat (10), dann das Ausdünnen der vergrabenen Oxidschicht (12) aufweist, um eine ausgedünnte vergrabene Oxidschicht (12.1) zu erhalten.

8. Herstellungsverfahren nach Anspruch 4, wobei die dünne Oxidschicht (36) durch Aufbringen eines Oxids auf den photonischen integrierten Schaltkreis (20) auf der Seite der Vorderseite realisiert wird.

9. Herstellungsverfahren nach einem der Ansprüche 1 bis 8, aufweisend einen Schritt des Realisierens mindestens eines Bragg-Spiegels (73; 74) durch Bildung durchgehender Aussparungen in der ersten Siliziumdünnschicht (13), die anschließend mit einem elektrisch isolierenden Material gefüllt werden, wobei die durchgehenden Aussparungen gleichzeitig mit der Realisierung mindestens eines Wellenleiters des photonischen integrierten Schaltkreises (20) durch denselben lokalisierten Ätzschritt realisiert werden.

10. Optoelektronisches System (1) in der Silizium-Photonik, das eine optische Vorrichtung (60) und einen photonischen integrierten Schaltkreis (20) aufweist:
∘ wobei die optische Vorrichtung (60) einen oberen Wellenleiter (61) aufweist;
∘ wobei der photonische integrierte Schaltkreis (20) einen unteren Wellenleiter (13.1) aus monokristallinem Silizium aufweist, der sich in einer unteren Ebene erstreckt;
∘ wobei der obere Wellenleiter (61) optisch mit dem unteren Wellenleiter (13.1) durch einen Zwischenwellenleiter (43.1) aus Silizium gekoppelt ist, der sich in einer separaten Zwischenebene und parallel zu der unteren Ebene erstreckt;
∘ **dadurch gekennzeichnet, dass** der Zwischenwellenleiter (43.1) aus monokristallinem Silizium realisiert ist und dass der Zwischenwellenleiter (43.1) einen Teil aufweist, der dem unteren Wellenleiter (13.1) überlagert ist, und einen anderen Teil, der dem oberen Wellenleiter (61) überlagert ist, in einer Richtung orthogonal zu der Zwischen- und zu der unteren Ebene.

11. Optoelektronisches System nach Anspruch 10, wobei die optische Vorrichtung (60) aus einem Modulator, einer Photodiode, einem optischen Halbleiterverstärker oder eine Laserquelle ausgewählt ist, wobei der obere Wellenleiter (61) ein aktiver Wellenleiter ist, der ein Verstärkungsmedium enthält, wobei der obere Wellenleiter aus einem Halbleitermaterial auf Basis einer III-V-Verbindung, eines IV-Elements oder einer IV-Verbindung oder einer II-VI-Verbindung realisiert ist.

12. Optoelektronisches System nach Anspruch 10 oder 11, wobei der untere Wellenleiter (13.1) eine homogene Dicke e1 von weniger als 350 nm aufweist und der Zwischenwellenleiter (43.1) eine homogene Dicke e2 zwischen 400 nm und 600 nm aufweist.

13. Optoelektronisches System nach einem der Ansprüche 10 bis 12, aufweisend mindestens einen Bragg-Spiegel, der aus monokristallinem Silizium realisiert ist und sich koplanar zu dem unteren Wellenleiter (13.1) befindet.

14. Optoelektronisches System nach Anspruch 13, wobei sich der Bragg-Spiegel (73) unter und entlang des Zwischenwellenleiters (43.1) erstreckt und evaneszent mit diesem gekoppelt ist, wobei die optische Vorrichtung (60) eine Laserquelle mit verteilter Rückkopplung ist; oder zwei Bragg-Spiegel (74) aufweist, die sich unter dem Zwischenwellenleiter (43.1) befinden, wobei die optische Vorrichtung (60) eine Laserquelle mit verteiltem Bragg-Reflektor ist.

15. Optoelektronisches System nach Anspruch 14, aufweisend mindestens eine Heizung (39), die sich auf der Seite einer Vorderseite des photonischen integrierten Schaltkreises (20) dem Bragg-Spiegel (73; 74) zugewandt befindet, wobei die Heizung eine der Metallisierungsebenen (33) eines Verbindungsabschnitts (31) ist, der Metallisierungsebenen (33) aufweist, die mit aktiven optischen Komponenten (21, 22) des photonischen integrierten Schaltkreises (20) über leitende Vias (34) verbunden sind, die sich durch eine Zwischenmetall-Isolierschicht (32) erstrecken.

## Claims

1. A process for fabricating a photonics-on-silicon optoelectronic system (1) comprising an optical device (60) and an integrated photonic circuit (20), the optical device (60) comprising an upper waveguide (61), the integrated photonic circuit (20) comprising a lower waveguide (13.1) that is made of single-crystal silicon and that extends in a lower plane, the upper waveguide (61) being optically coupled to the lower waveguide (13.1) by an intermediate waveguide (43.1) that is made of silicon and that extends in an intermediate plane that is distinct from and parallel to the lower plane, the process comprising the following steps:
∘ providing a first SOI substrate (10) of the silicon-on-insulator type comprising a first thin single-crystal-silicon layer (13) that is of a first thickness e1 and that has a back side which is oriented toward a buried-oxide layer (12) of the first SOI substrate (10), and an opposite front side;
∘ producing the lower waveguide (13.1) by etching the first thin silicon layer (13) locally; then
∘ producing the intermediate waveguide (43.1); then
∘ producing the upper waveguide (61) of the optical device (60);
∘ wherein the step of producing the intermediate waveguide (43.1) comprises the following operations:
• joining the first SOI substrate (10) to a second SOI substrate (40) comprising a second thin single-crystal-silicon layer (43) of a second thickness e2 different from e1, the second thin single-crystal-silicon layer (43) being located facing the integrated photonic circuit (20);
• removing a carrier substrate (41) and a buried-oxide layer (42) of the second SOI substrate (40), so as to free one side of the second thin single-crystal-silicon layer (43);
• producing the intermediate waveguide (43.1) by etching the second thin single-crystal-silicon layer (43) locally.

2. The fabricating process as claimed in claim 1, wherein the intermediate waveguide (43.1) is partially superposed both with the lower waveguide (13.1) and with the upper waveguide (61).

3. The fabricating process according to claims 1 or 2, wherein the lower waveguide (13.1) has a uniform thickness equal to the value e1, and the intermediate waveguide (43.1) has a uniform thickness equal to the value e2.

4. The fabricating process according to anyone of claims 1 to 3, wherein the second SOI substrate (40) is joined by direct oxide/oxide bonding to the first SOI substrate (10), a thin bonding layer (51) based on an oxide being deposited on the second thin single-crystal-silicon layer (43), and a thin oxide layer (12.1 ; 36) covering the integrated photonic circuit (20), the first and second SOI substrates being joined by bringing the thin bonding layer (51) into contact with the thin oxide layer (12.1 ; 36).

5. The fabricating process as claimed in claim 4, wherein the thin oxide layer (12.1) is produced by thinning the buried-oxide layer (12) of the first SOI substrate (10).

6. The fabricating process as claimed in claim 5, comprising, following production of the integrated photonic circuit (20) which comprises active optical components (21, 22), a step of producing, front side, an interconnect portion (31) comprising metallization levels (33) that are connected to the active optical components (21, 22) by conductive vias (34) that extend through an inter-metal insulating layer (32).

7. The fabricating process as claimed in claim 6, comprising, subsequently to production of the interconnect portion (31), steps of joining a handle (35) to a free side of the interconnect portion (31), then of removing a carrier substrate (11) of the first SOI substrate (10), then of thinning the buried-oxide layer (12) to obtain a thinned buried-oxide layer (12.1).

8. The fabricating process as claimed in claim 4, wherein the thin oxide layer (36) is produced by depositing an oxide on the front side of the integrated photonic circuit (20).

9. The fabricating process according to anyone of claims 1 to 8, comprising a step of producing at least one Bragg mirror (73 ; 74) by forming through-notches in the first thin silicon layer (13), which through-notches are then filled with an electrically insulating material, the through-notches being produced simultaneously to production of at least one waveguide of the integrated photonic circuit (20), in a same local etching step.

10. A photonics-on-silicon optoelectronic system (1) comprising an optical device (60) and an integrated photonic circuit (20):
∘ the optical device (60) comprising an upper waveguide (61);
∘ the integrated photonic circuit (20) comprising a lower waveguide (13.1) that is made of single-crystal silicon and that extends in a lower plane;
∘ the upper waveguide (61) being optically coupled to the lower waveguide (13.1) by an intermediate waveguide (43.1) that is made of silicon and that extends in an intermediate plane that is distinct from and parallel to the lower plane;
∘ **characterized in that** the intermediate waveguide (43.1) is made of single-crystal silicon, and **in that** the intermediate waveguide (43.1) comprises a portion superposed to the lower waveguide (13.1) and another portion superposed to the upper waveguide (61), along a direction orthogonal to the intermediate and lower planes.

11. The optoelectronic system (1) as claimed in claim 10, the optical device (60) being chosen from a modulator, a photodiode, a semiconductor optical amplifier, or a laser source in which the upper waveguide (61) is an active waveguide containing a gain medium, the upper waveguide (61) being produced from a semiconductor based on a III-V compound, on a IV element or compound, or on a II-VI compound.

12. The optoelectronic system (1) according to claims 10 or 11, wherein the lower waveguide (13.1) has a uniform thickness e1 smaller than 350 nm, and the intermediate waveguide (43.1) has a uniform thickness e2 comprised between 400 nm and 600 nm.

13. The optoelectronic system (1) according to anyone of claims 10 to 12, comprising at least one Bragg mirror produced from single-crystal silicon and located coplanar with the lower waveguide (13.1).

14. The optoelectronic system (1) as claimed in claim 13, wherein the Bragg mirror (73) extends under and along the intermediate waveguide (43.1) and is evanescently coupled thereto, the optical device (60) being a distributed-feedback laser source; or comprising two Bragg mirrors (74) located under the intermediate waveguide (43.1), the optical device (60) being a distributed-Bragg-reflector laser source.

15. The optoelectronic system (1) as claimed in claim 14, comprising at least one heater (39) located, on the front side of the integrated photonic circuit (20), facing the Bragg mirror (73 ; 74), the heater being one of the metallization levels (33) of an interconnect portion (31) comprising metallization levels (33) that are connected to the active optical components (21, 22) of the integrated photonic circuit (20) by conducting vias (34) that extend through an inter-metal insulating layer (32).
